# EUROPEAN PATENT APPLICATION

(11) **EP 4 640 727 A1**
(43) Date of publication of application: **29.10.2025**
(21) Application number: 23906877.8
(22) Date of filing: 14.12.2023
(51) Int. Cl.: C08G 18/00, B32B 15/095, B32B 27/40, C08G 18/42, C08G 18/76

(54) **AQUEOUS URETHANE RESIN COMPOSITION, MULTILAYER BODY AND ARTICLE**

(30) Priority: 22.12.2022 JP 2022205439
(71) Applicant: DIC Corporation, Tokyo 174-8520 (JP)
(72) Inventor: OKINO, Kouhei, Takaishi-shi, Osaka 592-0001 (JP); YAMAMOTO, Shinya, Takaishi-shi, Osaka 592-0001 (JP)
(74) Representative: Kraus & Lederer PartGmbB
(86) International application number: PCT/JP2023/044773
(87) International publication number: WO 2024/135512

(57) **Abstract**

The invention provides an aqueous urethane resin composition including: (A) a urethane resin made from (a1) a polyol compound and (a2) a polyisocyanate compound as essential raw materials; and (B) an aqueous medium, in which the polyol compound (a1) includes a polyester polyol made from diethylene glycol and/or ethylene glycol as a raw material, and the urethane resin (A) has an aromatic ring concentration of 1.4 mol/kg or more. This aqueous urethane resin composition has excellent barrier resistance, adhesion, and blocking resistance.

## Description

### TECHNICAL FIELD

The present invention relates to an aqueous urethane resin composition having excellent barrier resistance, adhesion, and blocking resistance, and also to a laminate and an article using the aqueous urethane resin composition.

### BACKGROUND ART

By forming a metallized film on the surface of a resin film, high gas barrier properties can be imparted. Resin molded articles with such deposition-treated surfaces are widely used in everyday products, such as packaging materials for foods, beverages, and the like.

In such a resin molded product, adherence is required between the substrate and the deposited film. However, depending on the kind of resin constituting the substrate, adherence to the deposited film may be poor. In order to improve adherence, for example, a formulation in which a primer layer is provided on the substrate surface has been proposed.

For example, it is known to use a resin layer containing a polyolefin resin as a primer, as in a deposited film laminate that is a laminate including a polyolefin resin-containing resin layer and a deposited film laminated in this order on a substrate, which is characterized in that the polyolefin resin is a polyolefin resin containing, as a main component, an olefin component (A) composed of a C₂₋₄ alkene, and also containing 2 to 40 mass% of a (meth)acrylic acid ester component (B) (see, e.g., PTL 1). However, the barrier resistance, adhesion, and blocking resistance have been insufficient, and the ever-increasing performance requirements have not been satisfied.

Thus, there has been a need for materials having excellent barrier resistance, adhesion, and blocking resistance.

### CITATION LIST

### PATENT LITERATURE

PTL 1: JP2011-31526A

### SUMMARY OF INVENTION

### TECHNICAL PROBLEM

The problem to be solved by the invention is to provide an aqueous urethane resin composition having excellent barrier resistance, adhesion, and blocking resistance, and also a laminate and an article using the aqueous urethane resin composition.

### SOLUTION TO PROBLEM

The present inventors have conducted extensive research to solve the above problems. As a result, they have found that the above problems can be solved by using a urethane resin made form a specific polyol compound as an essential raw material and having a specific aromatic ring concentration, and thus accomplished the invention.

That is, the invention relates to an aqueous urethane resin composition including: (A) a urethane resin made from (a1) a polyol compound and (a2) a polyisocyanate compound as essential raw materials; and (B) an aqueous medium, in which the polyol compound (a1) includes a polyester polyol made from diethylene glycol and/or ethylene glycol as a raw material, and the urethane resin (A) has an aromatic ring concentration of 1.4 mol/kg or more, and also to a laminate and an article using the same.

### ADVANTAGEOUS EFFECTS OF INVENTION

The aqueous urethane resin composition of the invention has excellent barrier resistance, adhesion, and blocking resistance, and thus can be favorably used as a film primer or as a coating agent for leather, textile, and metal products, for example. In addition, the aqueous urethane resin composition of the invention uses raw materials with low greenhouse gas emissions, and thus significantly contributes to carbon neutrality.

### DESCRIPTION OF EMBODIMENTS

In the aqueous urethane resin composition of the invention, the polyol compound (a1) and the polyisocyanate compound (a2) are essential raw materials.

As the polyol compound (a1), a polyester polyol is used as an essential component.

The polyester polyol is obtained by subjecting a polycarboxylic acid and a polyhydric alcohol to an esterification reaction. As the polyhydric alcohol, at least one of diethylene glycol and ethylene glycol is used.

As the polycarboxylic acid, for example, aromatic dicarboxylic acids such as phthalic acid, isophthalic acid, terephthalic acid, and naphthalenedicarboxylic acid, as well as acid anhydrides and esterification products thereof, aliphatic dicarboxylic acids such as succinic acid, glutaric acid, adipic acid, maleic acid, pimelic acid, suberic acid, azelaic acid, itaconic acid, sebacic acid, chlorendic acid, 1,2,4-butane-tricarboxylic acid, decanedicarboxylic acid, cyclohexanedicarboxylic acid, dimer acid, and fumaric acid, as well as acid anhydrides and esterification products thereof, and the like can be mentioned. These polycarboxylic acids, as well as acid anhydrides and esterification products thereof, can be used alone, and it is also possible to use two or more kinds together.

As the polyhydric alcohol, in addition to diethylene glycol and ethylene glycol, as necessary, other polyhydric alcohols, for example, aromatic diols such as benzene dimethanol, toluene dimethanol, and xylene dimethanol, aliphatic polyols such as propylene glycol, 1,3-propylene diol, 1,4-butanediol, 1,6-hexanediol, 1,8-octanediol, triethylene glycol, cyclohexane-1,4-diol, cyclohexane-1,4-dimethanol, neopentyl glycol, and ethylene glycol, and the like, can be mentioned. These polyhydric alcohols can be used alone, and it is also possible to use two or more kinds together.

Among them, for the reason that an aqueous urethane resin composition having excellent barrier resistance, adhesion, and blocking resistance can be obtained, a polyester polyol made from diethylene glycol and/or ethylene glycol and phthalic acid as essential raw materials is preferable.

In the esterification reaction for producing the polyester polyol, it is preferable to use an esterification catalyst for the purpose of promoting the esterification reaction. As the esterification catalyst, for example, metals such as titanium, tin, zinc, aluminum, zirconium, magnesium, hafnium, and germanium; metal compounds such as titanium tetraisopropoxide, titanium tetrabutoxide, titanium oxyacetylacetonate, dibutyltin oxide, dibutyltin diacetate, dibutyltin dilaurate, tin octoate, 2-ethylhexanetin, zinc acetylacetonate, zirconium tetrachloride, zirconium tetrachloride tetrahydrofuran complex, hafnium tetrachloride, hafnium tetrachloride tetrahydrofuran complex, germanium oxide, and tetraethoxygermanium; and the like can be mentioned.

In addition, as the polyol compound (A), as necessary, other polyol compounds besides the above polyester polyols may also be used.

As the other polyol compounds, for example, polyether polyols, polycarbonate polyols, and the like can be mentioned. These polyol compounds can be used alone, and it is also possible to use two or more kinds together.

The content of the polyol compound (a1) is, for the reason that an aqueous urethane resin composition having excellent barrier resistance, adhesion, and blocking resistance can be obtained, preferably within a range of 30 to 85 mass%, more preferably within a range of 50 to 85 mass%, of the raw materials of the urethane resin (A).

As the polyisocyanate compound (a2), for example, aromatic polyisocyanates such as phenylene diisocyanate, toluene diisocyanate, diphenylmethane diisocyanate, xylylene diisocyanate, naphthalene diisocyanate, polymethylene polyphenyl polyisocyanate, and carbodiimidized diphenylmethane polyisocyanate; aliphatic polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate; alicyclic diisocyanates such as norbornane diisocyanate, isophorone diisocyanate, hydrogenated xylylene diisocyanate, and hydrogenated diphenylmethane diisocyanate; and the like can be mentioned. These polyisocyanate compounds can be used alone, and it is also possible to use two or more kinds together. In addition, among them, for the reason that an aqueous urethane resin composition having excellent barrier resistance, adhesion, and blocking resistance can be obtained, toluene diisocyanate is preferable.

The content of the polyisocyanate compound (a2) is, for the reason that an aqueous urethane resin composition having excellent barrier resistance, adhesion, and blocking resistance can be obtained, preferably within a range of 15 to 70 mass%, more preferably within a range of 15 to 50 mass%, of the raw materials of the urethane resin (A).

The aromatic ring concentration of the urethane resin (A) is 1.4 mol/kg or more, and is, for the reason that an aqueous urethane resin composition having excellent barrier resistance, adhesion, and blocking resistance can be obtained, preferably within a range of 2 to 4 mol/kg, and more preferably within a range of 2.5 to 3.5/kg.

The method for producing the urethane resin (A) is not particularly limited, and it may be produced by any method. For example, it may be produced by a method in which all the reaction raw materials including the polyol compound (a1) and the polyisocyanate compound (a2) are allowed to react at once, or may also be produced by a method in which the raw materials are allowed to react sequentially.

As the aqueous medium (B), for example, ion exchange water, distilled water, and the like can be mentioned. These aqueous media can be used alone, and it is also possible to use two or more kinds together.

In the aqueous urethane resin composition of the invention, a crosslinking agent (C) can also be used as necessary.

As the crosslinking agent (C), for example, melamine crosslinking agents, carbodiimide crosslinking agents, water-dispersible polyisocyanate crosslinking agents, epoxy crosslinking agents, oxazoline crosslinking agents, aziridine crosslinking agents, and the like can be mentioned. These crosslinking agents can be used alone, and it is also possible to use two or more kinds together. In addition, among them, for the reason that an aqueous urethane resin composition having excellent barrier resistance, adhesion, and blocking resistance can be obtained, carbodiimide crosslinking agents and water-dispersible polyisocyanate crosslinking agents are preferable.

The amount of the crosslinking agent (C) used is, for the reason that an aqueous urethane resin composition having excellent barrier resistance, adhesion, and blocking resistance can be obtained, preferably within a range of 6 to 20 mass%, more preferably within a range of 9 to 20 mass%, of the solids of the aqueous urethane resin composition.

The method for producing the aqueous urethane resin composition is not particularly limited, and it may be produced by any method. For example, a method in which it is obtained by mixing the urethane resin (A) and the aqueous medium (B), etc., can be mentioned.

As methods for mixing the urethane resin (A) and the aqueous medium (B), for example, a method in which mixing is performed by using a reaction vessel equipped with a stirring blade; a kneading machine such as a kneader, a continuous kneader, a taper roll, a single-screw extruder, a twin-screw extruder, a triple-screw extruder, a universal mixing machine, a plastomill, or a Votator kneading machine; a rotary dispersion mixing machine such as a homomixer, a static mixer, Filmix, Ebara Milder, Clearmix, Ultra-Turrax, Cavitron, or Biomixer; an ultrasonic dispersion apparatus; an apparatus that has no moving parts and can perform mixing by the flow of the fluid itself, such as an in-line mixer; or the like, etc., can be mentioned.

The mass ratio of the urethane resin (A) to the aqueous medium (B) [(A)/(B)] is, for the reason that an aqueous urethane resin composition having excellent barrier resistance, adhesion, and blocking resistance can be obtained, preferably within a range of 50/50 to 80/20, and more preferably within a range of 50/50 to 70/30.

The aqueous urethane resin composition of the invention may contain other additives as necessary.

As the other additives, for example, surfactants, emulsifiers, thickeners, urethanization catalysts, fillers, flame retardants, leveling agents, antiblocking agents, and the like can be mentioned. These additives can be used alone, and it is also possible to use two or more kinds together.

As the surfactants, for example, nonionic surfactants such as polyoxyethylene nonylphenyl ether, polyoxyethylene lauryl ether, polyoxyethylene styryl phenyl ether, polyoxyethylene sorbitol tetraoleate, and polyethylene-polypropylene copolymers; anionic surfactants such as sodium oleate and like fatty acid salts, alkyl sulfate ester salts, alkylbenzene sulfonates, alkyl sulfosuccinates, naphthalene sulfonates, polyoxyethylene alkyl sulfates, sodium alkanesulfonates, and sodium alkyldiphenyl ether sulfonates; cationic surfactants such as alkylamine salts, alkyltrimethylammonium salts, and alkyldimethylbenzylammonium salts; and the like can be mentioned.

As the emulsifiers, for example, nonionic emulsifiers such as polyoxyethylene nonylphenyl ether, polyoxyethylene lauryl ether, polyoxyethylene styryl phenyl ether, polyoxyethylene sorbitol tetraoleate, and polyethylene-polypropylene copolymers; anionic emulsifiers such as sodium oleate and like fatty acid salts, alkyl sulfate ester salts, alkylbenzene sulfonates, alkyl sulfosuccinates, naphthalene sulfonates, polyoxyethylene alkyl sulfates, sodium alkanesulfonates, and sodium alkyldiphenyl ether sulfonates; cationic emulsifiers such as alkylamine salts, alkyltrimethylammonium salts, and alkyldimethylbenzylammonium salts; and the like can be mentioned. These emulsifiers can be used alone, and it is also possible to use two or more kinds together.

As the thickeners, for example, associative, acid-based, and like thickeners can be mentioned.

As the urethanization catalysts, for example, organotin-based, bismuth-based, and like catalysts can be mentioned.

As the fillers, for example, calcium carbonate, silica, and the like can be mentioned.

As the flame retardants, for example, phosphorus-based flame retardants and the like can be mentioned.

As the leveling agents, for example, silicone-based leveling agents and the like can be mentioned.

As the antiblocking agents, for example, acrylic-based antiblocking agents, cellulose esters, and the like can be mentioned.

As the laminate of the invention, one that has a primer layer formed from the aqueous urethane resin composition on the surface of a substrate, and also has a deposited layer on the surface of the primer layer, is used.

The substrate is not particularly limited, and a thermoplastic resin film can be suitably selected according to the desired application. For example, as films for food packaging, polyolefin films such as polyethylene terephthalate (PET) films, polystyrene films, polyamide films, polyacrylonitrile films, polyethylene films (LLDPE: linear low density polyethylene films, HDPE: high density polyethylene films), and polypropylene films (CPP: unstretched polypropylene films, OPP: biaxially stretched polypropylene films), polyvinyl alcohol films, ethylene-vinyl alcohol copolymer films, cycloolefin copolymer films, and the like can be mentioned. These films can be preferably used with or without a stretching treatment.

The article of the invention has the above laminate, and, for example, packaging materials and the like can be mentioned.

### Examples

Hereinafter, the invention will be specifically described through examples and comparative examples. Incidentally, the invention is not limited to the following examples.

The number average molecular weights of the polyester polyols used in the examples and comparative examples are values measured by gel permeation chromatography (GPC) under the following conditions.

Measuring apparatus: High-performance GPC apparatus ("HLC-8220GPC" manufactured by Tosoh Corporation)
Column: The following columns manufactured by Tosoh Corporation were connected in series and used.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column temperature: 40°C
Eluent: Tetrahydrofuran (THF)
Flow rate: 1.0 mL/min
Injection volume: 100 µL (tetrahydrofuran solution having a sample concentration of 0.4 mass%)
Standard sample: The following standard polystyrenes were used to make calibration curves.

### (Standard Polystyrene)

"TSKgel Standard Polystyrene A-500" manufactured by Tosoh Corporation
"TSKgel Standard Polystyrene A-1000" manufactured by Tosoh Corporation
"TSKgel Standard Polystyrene A-2500" manufactured by Tosoh Corporation
"TSKgel Standard Polystyrene A-5000" manufactured by Tosoh Corporation
"TSKgel Standard Polystyrene F-1" manufactured by Tosoh Corporation
"TSKgel Standard Polystyrene F-2" manufactured by Tosoh Corporation
"TSKgel Standard Polystyrene F-4" manufactured by Tosoh Corporation
"TSKgel Standard Polystyrene F-10" manufactured by Tosoh Corporation
"TSKgel Standard Polystyrene F-20" manufactured by Tosoh Corporation
"TSKgel Standard Polystyrene F-40" manufactured by Tosoh Corporation
"TSKgel Standard Polystyrene F-80" manufactured by Tosoh Corporation
"TSKgel Standard Polystyrene F-128" manufactured by Tosoh Corporation
"TSKgel Standard Polystyrene F-288" manufactured by Tosoh Corporation
"TSKgel Standard Polystyrene F-550" manufactured by Tosoh Corporation

### (Synthesis Example 1: Synthesis of Polyester Polyol (1))

In a polyester reaction vessel equipped with a stirrer, a nitrogen gas inlet tube, a rectification column, a moisture separator, and the like, 520 parts by mass of phthalic anhydride, 480 parts by mass of diethylene glycol, and 0.05 parts by mass of titanium tetraisopropoxide were charged and gradually heated in such a manner that the temperature at the top of the rectification column did not exceed 100°C, and the internal temperature was maintained at 220°C. When the acid value became 10 mgKOH/g or less, heating was continued at 100 torr under reduced pressure, and when the acid value became 1 mgKOH/g or less, the esterification reaction was completed, thereby giving a polyester polyol (1) having a number average molecular weight of 985.

### (Synthesis Example 2: Synthesis of Polyester Polyol (2))

In a polyester reaction vessel equipped with a stirrer, a nitrogen gas inlet tube, a rectification column, a moisture separator, and the like, 462 parts by mass of phthalic anhydride, 539 parts by mass of diethylene glycol, and 0.05 parts by mass of titanium tetraisopropoxide were charged and gradually heated in such a manner that the temperature at the top of the rectification column did not exceed 100°C, and the internal temperature was maintained at 220°C. When the acid value became 10 mgKOH/g or less, heating was continued at 100 torr under reduced pressure, and when the acid value became 1 mgKOH/g or less, the esterification reaction was completed, thereby giving a polyester polyol (2) having a number average molecular weight of 509.

### (Synthesis Example 3: Synthesis of Polyester Polyol (3))

In a polyester reaction vessel equipped with a stirrer, a nitrogen gas inlet tube, a rectification column, a moisture separator, and the like, 661 parts by mass of phthalic anhydride, 339 parts by mass of ethylene glycol, and 0.05 parts by mass of titanium tetraisopropoxide were charged and gradually heated in such a manner that the temperature at the top of the rectification column did not exceed 100°C, and the internal temperature was maintained at 220°C. When the acid value became 10 mgKOH/g or less, heating was continued at 100 torr under reduced pressure, and when the acid value became 1 mgKOH/g or less, the esterification reaction was completed, thereby giving a polyester polyol (3) having a number average molecular weight of 1,001.

### (Synthesis Example 4: Synthesis of Polyester Polyol (4))

In a polyester reaction vessel equipped with a stirrer, a nitrogen gas inlet tube, a rectification column, a moisture separator, and the like, 621 parts by mass of phthalic anhydride, 380 parts by mass of ethylene glycol, and 0.05 parts by mass of titanium tetraisopropoxide were charged and gradually heated in such a manner that the temperature at the top of the rectification column did not exceed 100°C, and the internal temperature was maintained at 220°C. When the acid value became 10 mgKOH/g or less, heating was continued at 100 torr under reduced pressure, and when the acid value became 1 mgKOH/g or less, the esterification reaction was completed, thereby giving a polyester polyol (4) having a number average molecular weight of 518.

### (Synthesis Example 5: Synthesis of Polyester Polyol (5))

In a polyester reaction vessel equipped with a stirrer, a nitrogen gas inlet tube, a rectification column, a moisture separator, and the like, 595 parts by mass of adipic acid, 405 parts by mass of 1,4-butylene glycol, and 0.05 parts by mass of titanium tetraisopropoxide were charged and gradually heated in such a manner that the temperature at the top of the rectification column did not exceed 100°C, and the internal temperature was maintained at 220°C. When the acid value became 10 mgKOH/g or less, heating was continued at 100 torr under reduced pressure, and when the acid value became 1 mgKOH/g or less, the esterification reaction was completed, thereby giving a polyester polyol (5) having a number average molecular weight of 2,000.

The compositions of the polyester polyols (1) to (5) obtained in Synthesis Examples 1 to 5 are shown in Table 1.

**[Table 1]**

| Table 1 | | Synthesis Example 1 | Synthesis Example 2 | Synthesis Example 3 | Synthesis Example 4 | Synthesis Example 5 |
|---|---|---|---|---|---|---|
| Polyester polyol | | (1) | (2) | (3) | (4) | (5) |
| Composition (parts by mass) | Isophthalic acid | | | | | |
| | Phthalic anhydride | 520 | 462 | 661 | 621 | |
| | Adipic acid | | | | | 595 |
| | Sebacic acid | | | | | |
| | Ethylene glycol | | | 339 | 380 | |
| | Neopentyl glycol | | | | | |
| | Diethylene glycol | 480 | 539 | | | |
| | 1,4-Butylene glycol | | | | | 405 |
| Hydroxyl value | | 114 | 220 | 112 | 216 | 56 |
| Acid value | | 0.3 | 0.7 | 0.5 | 0.7 | 0.3 |
| Number average molecular weight | | 985 | 509 | 1001 | 518 | 2000 |

### (Example 1: Synthesis of Aqueous Urethane Resin Composition (1))

In a four-neck flask equipped with a thermometer, a stirring apparatus, a reflux condenser, and a nitrogen inlet tube, 124 parts by mass of the polyester polyol (1) obtained in Synthesis Example 1, 11 parts by mass of 2,2-dimethylolpropionic acid (DMPA), and 139 parts by mass of methyl ethyl ketone were added, then 36 parts by mass of tolylene diisocyanate was added, and the mixture was allowed to react at 75°C for 8 hours. Next, the mixture was cooled to 50°C, and 8.5 parts by mass of triethylamine was added for neutralization to obtain a urethane resin. Next, 682 parts by mass of ion exchange water was added to make the mixture water-soluble. Methyl ethyl ketone was removed at 40 to 60°C from the resulting transparent reaction product under reduced pressure, and then ion exchange water was added to adjust the concentration, thereby giving a stable aqueous urethane resin composition (1) having a nonvolatile content of 23 mass%.

### (Examples 2 to 4: Synthesis of Aqueous Urethane Resin Compositions (2) to (4))

Aqueous urethane resin compositions (2) to (4) were obtained in the same manner as in Example 1, except that the polyester polyol used in Example 1 was changed to those shown in Table 2.

### (Comparative Example 1: Synthesis of Aqueous Urethane Resin Composition (R1))

An aqueous urethane resin composition (R1) was obtained in the same manner as in Example 1, except that the polyester polyol used in Example 1 was changed to one shown in Table 2.

### (Comparative Example 2: Synthesis of Aqueous Urethane Resin Composition (R2))

An aqueous urethane resin composition (R2) was obtained in the same manner as in Example 1, except that the polyester polyol used in Example 1 was changed to the polytetramethylene glycol shown in Table 2.

The compositions of the aqueous urethane resin compositions (1) to (4) obtained in Examples 1 to 4 and the aqueous urethane resin compositions (R1) and (R2) obtained in Comparative Examples 1 and 2 are shown in Table 2.

**[Table 2]**

| Table 2 | | Example 1 | Example 2 | Example 3 | Example 4 | Comparative Example 1 | Comparative Example 2 |
|---|---|---|---|---|---|---|---|
| Aqueous urethane resin composition | | (1) | (2) | (3) | (4) | (R1) | (R2) |
| Composition (parts by mass) | Polyester polyol (1) | 124 | | | | | |
| | Polyester polyol (2) | | 96 | | | | |
| | Polyester polyol (3) | | | 124 | | | |
| | Polyester polyol (4) | | | | 97 | | |
| | Polyester polyol (5) | | | | | 90 | |
| | Polybutylene glycol, Mn: 2000 | | | | | | 101 |
| | 2,2'-Dimethylolpropionic acid | 11 | 15 | 11 | 15 | 10 | 10 |
| | 1,4-Butanediol | | | | | 15 | 11 |
| | Tolylene diisocyanate | 36 | 53 | 35 | 53 | 50 | 43 |
| | Methyl ethyl ketone | 139 | 134 | 139 | 134 | 158 | 158 |
| | Triethylamine | 8.5 | 12.2 | 8.4 | 12.2 | 8.2 | 8.2 |
| | Ion exchange water | 682 | 688 | 682 | 688 | 668 | 707 |
| Aromatic ring concentration | | 2.6 | 1.8 | 3.3 | 2.5 | 0 | 0 |
| Nonvolatile content (mass%) | | 23 | 23 | 23 | 23 | 23 | 23 |

### (Examples 5 to 10: Preparation of Primer Coating Agents (1) to(6))

According to Table 3, a crosslinking agent was added to 10 parts by mass of the aqueous urethane resin compositions obtained in the examples, followed by dilution with water as an aqueous medium, thereby giving primer coating agents (1) to (6) each having a nonvolatile content of 10 mass%.

### (Comparative Examples 3 to 6: Preparation of Primer Coating Agents (R1) to(R4))

According to the formulations shown in Table 3, primer coating agents (R1) to (R4) each having a nonvolatile content of 10 mass% were obtained in the same manner as in Examples 5 to 10.

The following evaluations were performed using the primer coating agents (1) to (6) and (R1) to (R4) obtained in the above examples and comparative examples.

### [Method for Evaluating Blocking Resistance]

A corona-treated substrate was attached to an OPP substrate ("FOR" manufactured by Futamura Chemical Co., Ltd., 20 µm thick) coated with the primer coating agent obtained in the examples and comparative examples, and, under a load of 2 kgf/cm², allowed to stand in a dryer at 40°C for 16 hours. Subsequently, the substrate was peeled off, and the tackiness at that time was evaluated according to the following criteria.

A: No tackiness was present at all, and peeling was easy.
B: Some tackiness was present, but there was no change in the coated surface.
C: Strong tackiness was present, and surface defects were observed on the coated surface.

### [Method for Evaluating Adhesion]

In the invention, adhesion was evaluated by measuring the lamination adhesive strength.

On the surface of an OPP substrate ("FOR" manufactured by Futamura Chemical Co., Ltd., 20 µm thick) coated with the primer coating agent obtained in the examples and comparative examples, DICDRY LX-703VL (solvent-based polyester polyol manufactured by DIC Graphics Corporation) and KR-90 (polyisocyanate crosslinking agent manufactured by DIC Graphics Corporation) were blended in a mass ratio of 15/1, and ethyl acetate was blended to make the nonvolatile content 30%, preparing an adhesive.

The obtained adhesive was applied using a bar coater to a coating weight of 3.0 g/m², and the solvent was volatilized with hot air at 80°C using a dryer to form an adhesive layer. Next, a CPP film ("RXC-22", No. 50, manufactured by Mitsui Chemicals Tohcello, Inc.) was attached onto the adhesive layer, and then allowed to stand in a dryer at 40°C for aging, thereby giving a laminate film for evaluation. The laminate film was cut to a width of 15 mm in the application direction, and, using a desktop precision universal testing machine ("Autograph AGS-X" manufactured by Shimadzu Corporation) with the ambient temperature set at 23°C and the peel speed at 300 mm/min, the laminated films were separated in a 180° direction. The tensile strength at that time was defined as the lamination strength. The unit of lamination strength was N/15 mm.

### [Method for Evaluating Barrier Resistance]

In the invention, barrier resistance was evaluated by measuring the oxygen transmission rate.

On an OPP substrate ("FOR" manufactured by Futamura Chemical Co., Ltd., 20 µm thick) coated with the primer coating agent obtained in the examples and comparative examples, deposition was performed, and the oxygen transmission rate (cc/(m²·day·atm)) was measured using "OX-TRAN2/22" manufactured by MOCON in an atmosphere at 23°C × 0% RH (relative humidity) in accordance with JIS-K7126 (equal pressure method).

The compositions and evaluation results of the primer coating agents (1) to (6) and (R1) to (R4) obtained in the above examples and comparative examples are shown in Table 3.

**[Table 3]**

| Table 3 | | Example 5 | Example 6 | Example 7 | Example 8 | Example 9 | Example 10 | Comparative Example 3 | Comparative Example 4 | Comparative Example 5 | Comparative Example 6 |
|---|---|---|---|---|---|---|---|---|---|---|---|
| Primer coating agent | | (1) | (2) | (3) | (4) | (5) | (6) | (R1) | (R2) | (R3) | (R4) |
| Composition (parts by mass) | Aqueous urethane resin composition (1) | 10 | 10 | | | | | | | | |
| | Aqueous urethane resin composition (2) | | | 10 | | | | | | | |
| | Aqueous urethane resin composition (3) | | | | 10 | 10 | | | | | |
| | Aqueous urethane resin composition (4) | | | | | | 10 | | | | |
| | Aqueous urethane resin composition (5) | | | | | | | 10 | | | |
| | Aqueous urethane resin composition (6) | | | | | | | | 10 | | |
| | AE301 (modified PP) | | | | | | | | | 10 | 10 |
| | Carbodilite SV-02 | 0.9 | | 1.4 | 0.9 | | 1.4 | 0.9 | 0.9 | | 1.2 |
| | Bayhydur_ultra_3100 | | 0.6 | | | 0.6 | | | | | |
| | Water | 16 | 18 | 17 | 16 | 17 | 17 | 16 | 16 | 22 | 25 |
| Evaluation Item | Barrier resistance; Al deposition_OTR (0%RH) | 1.3 | 1.2 | 2.4 | 9.6 | 7 | 4.7 | 66 | 47 | 506 | 71 |
| | Barrier resistance; AlOx deposition_OTR (0%RH) | 19 | 3.7 | 14 | 18.1 | 8.7 | 18.8 | 71 | 112 | 257 | 333 |
| | Adhesion; 180° peel strength (N/15 mm) | 0.7 | 2.1 | 0.3 | 0.6 | 1.5 | 0.5 | 1.2 | 2.8 | 5 | 4.3 |
| | Blocking resistance | A | A | A | A | A | A | B | C | B | B |

"AE-301" in Table 3 indicates "AE-301" (aqueous modified polypropylene resin) manufactured by Nippon Paper Industries Co., Ltd.

"Carbodilite SV-02" in Table 3 indicates "Carbodilite SV-02" (carbodiimide crosslinking agent) manufactured by Nisshinbo Chemical Inc.

"Bayhydur ultra 3100" in Table 3 indicates "Bayhydur ultra 3100" (polyisocyanate crosslinking agent) manufactured by Sumika Covestro Urethane Co., Ltd.

Examples 5 to 10 shown in Table 3 are examples of primer coating agents containing the aqueous urethane resin composition of the invention. These primer coating agents were found to have excellent barrier resistance, adhesion, and blocking resistance.

Meanwhile, Comparative Example 3 shown in Table 3 is an example of a primer coating agent containing an aqueous urethane resin composition using, as a raw material of the urethane resin, a polyester polyol that does not use diethylene glycol or ethylene glycol. This primer coating agent was found to be significantly insufficient in barrier resistance.

Comparative Example 4 shown in Table 3 is an example of a primer coating agent containing an aqueous urethane resin composition that does not use a polyester polyol as a raw material of the urethane resin. This primer coating agent was found to be significantly insufficient in blocking resistance.

Comparative Examples 5 and 6 shown in Table 3 are examples of primer coating agents that do not use an aqueous urethane resin composition. These primer coating agents were found to be significantly insufficient in barrier resistance.

## Claims

1. An aqueous urethane resin composition comprising:
(A) a urethane resin made from (a1) a polyol compound and (a2) a polyisocyanate compound as essential raw materials; and
(B) an aqueous medium,
wherein
the polyol compound (a1) includes a polyester polyol made from diethylene glycol and/or ethylene glycol as a raw material, and
the urethane resin (A) has an aromatic ring concentration of 1.4 mol/kg or more.

2. The aqueous urethane resin composition according to claim 1, wherein the polyester polyol is made from diethylene glycol and/or ethylene glycol and phthalic acid as essential raw materials.

3. The aqueous urethane resin composition according to claim 1, wherein the polyisocyanate compound (a2) is toluene diisocyanate.

4. The aqueous urethane resin composition according to claim 1, wherein the aqueous urethane resin further includes (C) a crosslinking agent.

5. A laminate comprising:
a primer layer formed from the aqueous urethane resin composition according to any one of claims 1 to 4 on a surface of a substrate; and
a deposited layer on a surface of the primer layer.

6. An article comprising the laminate according to claim 5.
